# FASCICULE DE BREVET EUROPEEN

(11) **EP 2 005 770 B1**
(45) Date de publication et mention de la délivrance du brevet: **09.01.2019**
(21) Numéro de dépôt: 07726809.2
(22) Date de dépôt: 12.03.2007
(51) Int. Cl.: H04W 92/12, H04B 7/185, H04W 72/04

(54) **PROCÉDÉ D'OPTIMISATION DE L'ALLOCATION DES RESSOURCES DANS UN RÉSEAU CELLULAIRE METTANT EN OEUVRE UNE LIAISON DE TRANSMISSION RADIO PARTAGÉE, ET RÉSEAU CORRESPONDANT**
VERFAHREN ZUM OPTIMIEREN DER ZUTEILUNG VON BETRIEBSMITTELN IN EINEM ZELLULAREN NETZWERK MIT EINER GEMEINSAM BENUTZTEN FUNKÜBERTRAGUNGSSTRECKE, UND NETZWERK DAFÜR
METHOD FOR OPTIMIZING ALLOCATION OF RESOURCES IN A CELLULAR NETWORK USING A SHARED RADIO TRANSMISSION LINK, AND CORRESPONDING NETWORK

(30) Priorité: 14.03.2006 FR 0602222
(43) Date de publication de la demande: 24.12.2008
(73) Titulaire: CELL & SAT, 75001 Paris (FR)
(72) Inventeur: DE JAEGER, Bogéna, F-75011 Paris (FR); MOULY, Michel, F-91120 Palaiseau (FR); VERHULST, Didier, F-78170 La Celle St Cloud (FR)
(74) Mandataire: Vidon Brevets & Stratégie
(86) Numéro de dépôt international: PCT/EP2007/052303
(87) Numéro de publication internationale: WO 2007/104741

(56) Documents cités:
- EP-A- 1 387 592
- EP-A2- 0 797 319
- EP-A2- 1 282 320
- WO-A1-2004/112280
- FR-A1- 2 803 713
- US-A- 5 761 195

## Description

### 1. Domaine de l'invention

Le domaine de l'invention est celui des réseaux de communication. Plus précisément, l'invention concerne les réseaux cellulaires tels que notamment, mais non exclusivement, le GSM (« Global System for Mobile » en anglais) ou l'UMTS (« Universal Mobile Telecommunications Service » en anglais), dans lesquels sont mises en oeuvre des liaisons d'infrastructure avec transmission radio, par exemple de type satellite.

L'invention s'applique particulièrement, mais non exclusivement, à un système radio permettant de relier, via un satellite, un ensemble de stations de base, appelées BTS dans le cas du GSM (Node B dans le cas de l'UMTS), avec un équipement central appelé Hub, lequel a pour rôle d'allouer les ressources radio par satellite nécessaires à la transmission entre les stations de base et leur contrôleur de station de base, appelé BSC dans le GSM (RNC dans le cas de l'UMTS).

Plus généralement, la présente invention trouve son application dans tout réseau cellulaire incluant une liaison radio à ressources partagées susceptible d'être gérée dynamiquement.

Par allocation dynamique, on entend ici l'allocation de ressources selon les besoins du trafic des canaux radio, aussi bien dans le domaine temporel (« time slots » en anglais) que dans le domaine fréquentiel.

Enfin, l'invention s'applique aussi aux systèmes radio d'allocation statique de ressources, mais dans lesquels il est possible d'émuler un fonctionnement dynamique.

L'invention est particulièrement adaptée à la mise en oeuvre de réseau cellulaire dans des zones rurales ou isolées où le trafic des communications est relativement faible.

### 2. Techniques de l'art antérieur

Tout d'abord, par souci de clarté, on présente ici les inconvénients de l'état de la technique dans le cas particulier du standard GSM. Cependant, la présente invention s'applique aussi comme on l'a vu à tout type de réseau cellulaire. L'homme du métier pourra aisément mettre en oeuvre la présente invention dans un réseau de type UMTS ou autre.

La popularité grandissante du système GSM dans le monde entier a conduit les opérateurs à déployer ce service non seulement dans les régions urbaines, mais aussi de plus en plus dans des zones rurales. Dans ce dernier type de région, l'infrastructure terrestre est souvent insuffisante ou mal adaptée pour assurer le déploiement du réseau. Un système de liaison radio par satellite est alors un très bon moyen pour étendre le service GSM et ce type de solution est aujourd'hui communément utilisé pour assurer la transmission vers les équipements distants, telles que les stations de base.

Cependant, les ressources satellite sont coûteuses, et toute la problématique de ce type d'application réside dans les techniques de réduction de la bande passante nécessaire à la transmission des informations par satellite.

Pour plus de clarté, on décrit ci-après les inconvénients de l'art antérieur dans le cas spécifique d'une infrastructure de réseau cellulaire mise en oeuvre par l'intermédiaire d'une liaison satellite statique ou une liaison satellite dynamique de type DAMA (pour « Demand Assigned Multiple Access »). Cependant, l'invention s'applique plus généralement à tout réseau cellulaire mettant en oeuvre une liaison de type radio à ressources partagées..

### 2.1 Architecture du GSM

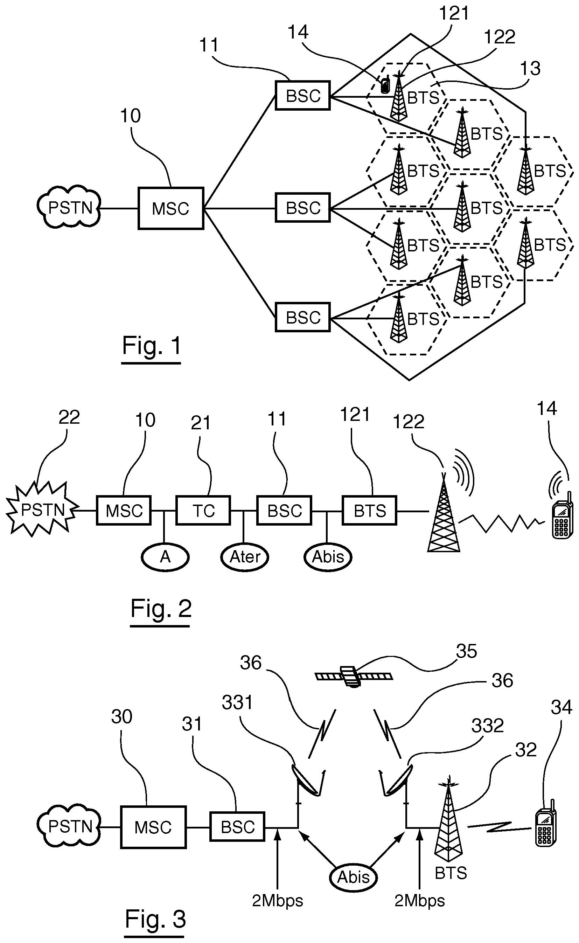

En relation avec la figure 1, l'architecture classique d'un réseau cellulaire de type GSM comprend un commutateur de service mobile 10, dit MSC (pour « Mobile Switching Center » en anglais), un contrôleur de station de base 11, dit BSC (pour « Base Station Controller » en anglais) et enfin une ou plusieurs stations de bases 12, dites BTS (pour « Base Transceiver Station » en anglais).

Chaque BTS assure la couverture radio GSM dans une ou plusieurs cellules. A titre d'exemple, en relation avec la figure 1, la BTS 121 est contrôlée par le BSC 11 et couvre la cellule géographique 13, dans laquelle se trouve un certain nombre d'utilisateurs disposant d'une Station Mobile (MS) de radiocommunication 14.

Plus précisément, le MSC contrôle la configuration des appels pour chaque appel entrant ou sortant, et il a un rôle d'interface avec les autres réseaux de télécommunications. Chaque communication passe par le MSC, qui contrôle plusieurs BSC.

Le BSC, quant à lui, est chargé d'allouer les canaux radio nécessaires pour chaque appel. Il gère les transferts intercellulaires entre deux BTS. Un seul BSC supporte plusieurs BTS qui assurent la couverture d'une large zone géographique.

Enfin, une BTS a pour rôle d'effectuer la transmission radio GSM avec les utilisateurs de Stations Mobiles. Les BTS sont localisées à proximité de « mâts » 122 supportant des antennes, et réparties dans l'espace géographique de couverture du réseau cellulaire.

Le standard GSM et ses évolutions, tels que défini par le groupe 3GPP (pour « third Generation Partnership Project » en anglais), utilisent la compression de voix. Cette compression est réalisée par un transcodeur aussi appelé TC. Selon la norme GSM , le TC peut être implémenté au site MSC, au site BSC ou encore au site BTS. Les considérations économiques conduisent à implémenter de préférence le TC au site MSC, de façon à réduire les coûts de transmission.

Plusieurs types de codecs ont été définis par le groupe 3GPP. Le codec GSM FR « plein débit » (« full rate » en anglais) opère à un débit de 13kbit/s. Les codecs HR « demi débit » (« half rate » en anglais) et EFR « plein débit étendu » (« enhanced full rate ») opèrent respectivement à 5,6kbit/s et 12,2 kbit/s. Après transcodage, la parole à 64 Kbit/s compressée à 13 / 12,2 kbit/s (respectivement 5.6 kbit/s) est véhiculée vers la station de base BTS sur un intervalle de temps à 16 kbit/s (respectivement 8 kbit/s). Selon la spécification 3GPP TS 08.60 (respectivement TS 08.61), la parole compressée est transmise à la BTS toutes les 20 ms selon le format de trame TRAU (pour « Transcoder and Adaptation Unit » en anglais).

Ces mêmes principes s'appliquent aux codages AMR (en anglais « Adaptative Multi Rate ») plein débit FR et débit réduit HR.

La trame TRAU transporte, en plus des informations de parole compressée, des informations de signalisation de type « bits de contrôle » permettant d'optimiser la qualité des communications entre l'entité de transcodage TC et l'unité de codage-décodage de canal CCU (pour « Channel Codec Unit » en anglais) à la BTS. Ces bits de contrôle permettent en particulier d'assurer la synchronisation des informations échangées, de définir le type de codage utilisé (FR, EFR, HR ou AMR), et aussi d'indiquer la discontinuité de la transmission liée aux silences de la parole (DTX).

De façon à introduire la mise en oeuvre d'une liaison satellite au sein d'un réseau cellulaire, on décrit maintenant succinctement, en relation avec la figure 2, les interfaces mises en oeuvre et leur dénomination entre les entités principales introduites précédemment.

On note PSTN (pour « Public Switched Telephone Network » en anglais) 22 le réseau téléphonique public commuté.

L'interface entre le MSC 10 et un BSC 11 est dite interface A.

L'interface entre un BSC 11 et la BTS 121 est nommée l'interface Abis.

Dans le cas où le TC 21 est implémenté au site MSC 10, l'interface entre le TC 21 et le BSC 11 est appelé Ater.

Une liaison satellite peut être utilisée au sein de la chaîne de transmission pour chacune de ces interfaces. La problématique principale de l'insertion d'une liaison satellite sur l'une de ces interfaces est alors de déterminer comment transmettre de façon efficace les informations nécessaires tout en minimisant la bande radio nécessaire de transmission par satellite.

L'interface A, utilisée entre un MSC et un BSC, est constituée par une ou plusieurs liaisons à 2 Mbit/s (Standard ITU G703/ G704). Chaque lien à 2Mbit/s supporte 30 canaux de voix non compressée - à 64 kbit/s - et un canal de signalisation SS7. Le nombre de liens à 2 Mbit/s dépend du dimensionnement du sous-système BSS. Le canal de signalisation contient des messages indiquant en particulier les besoins de trafic en fonction du nombre de communications.

L'interface Abis connecte un BSC avec une BTS et est constituée d'une ou plusieurs liaisons à 2 Mbit/s (Standard ITU G703/ G704). C'est une des interfaces qui est classiquement mise en oeuvre avec une transmission par satellite.

Cette interface Abis transporte des données de trafic, telle que la voix compressée et des informations de signalisation.
Sur l'interface Abis, deux types d'information de signalisation circulent:
- des messages de signalisation échangés avec la BTS, transportés dans un canal spécifique de signalisation, qui permettent de contrôler à la fois l'équipement BTS lui même et les terminaux mobiles (MS) qui sont en relation avec elle. Les messages correspondants sont spécifiés par le GSM dans la spécification TS 08.58
- des informations intrabande (« in band » en anglais) de contrôle qui sont transmises dans le même flux que les informations de trafic. Ces informations sont transmises, au sein des trames TRAU. Ces informations sont des « bits de contrôle », complémentaires des « bits de données », dont la signification est expliquée dans les spécification TS 08.60 / 08.61

Les informations de signalisation du premier type, constituées de messages protocolaires, sont véhiculées sur des intervalles de temps dédiés, avec typiquement sur l'interface Abis un débit de 64 kbit/s.

Chaque lien à 2 Mbit/s de l'interface Abis dispose de 31 intervalles de temps (TS pour « Time Slots » en anglais) qui sont alloués aux voies de signalisation ou aux canaux de parole. Selon la typologie du réseau et les choix de codage de la parole, un lien à 2 Mbit/s sur l'interface Abis peut typiquement être utilisé pour supporter jusqu'à dix canaux d'accès radio en transmission, dit TRX (en anglais « Transceiver »). Chaque TRX supporte lui-même huit canaux GSM dédiés à la parole à plein débit FR ou seize canaux GSM à demi débit HR. La réservation correspondante des canaux de parole sur l'interface Abis représente pour chaque TRX une allocation de 2 TS à 64 Kbit/s (8* 16 Kbit/s = 16* 8 Kbit/s= 128 Kbit/s).

Selon le dimensionnement du réseau GSM, la BTS est équipée d'un nombre N de TRXs , ce qui induit une occupation proportionnelle du nombre de d'intervalles de temps TS sur l'interface Abis.

### 2.2 Les applications satellite

On décrit en relation avec la figure 3 un réseau GSM classique mettant en oeuvre une liaison radio de type satellite. Une telle configuration est connue de WO 2004/112280 A1.

Le réseau de connexion GSM comprend alors, classiquement, un MSC 30, un BSC 31 ainsi qu'une station de base BTS 32, assurant les communications aux utilisateurs disposant d'un terminal mobile 34 et localisés dans la zone de couverture de la BTS 32.

De plus, une liaison radio 36 est mise en oeuvre au niveau de l'interface Abis, entre le BSC 31 et la BTS 32. Cette liaison radio 36 est assurée par un système radio par satellite contenant deux antennes 331 et 332 d'émission-réception de chaque côté de l'interface Abis, et un satellite 35.

On notera qu'il est possible en fait d'insérer une liaison radio par satellite au niveau de chacune des interfaces mises en oeuvre dans le système GSM : A, Abis, Ater. Mais l'insertion d'une telle liaison satellite au niveau de l'interface Abis, c'est-à-dire entre un BSC et des BTS, est très souvent préférée pour étendre le service GSM à des localisations géographiques distantes et de faible densité d'utilisateurs avec des coûts d'infrastructure minimaux.

De façon à éviter toute confusion, il est important de noter que dans une telle implémentation, deux types de systèmes radio sont mis en oeuvre, mais qu'ils n'ont pas le même rôle :
- Le réseau GSM en lui-même utilise de premières liaisons radio pour communiquer, et notamment pour effectuer la transmission entre les BTS et les utilisateurs de terminaux mobiles.
- Le système satellite consiste en une seconde liaison de transmission radio. Classiquement, un dispositif appelé Hub alloue les ressources radio nécessaires à la transmission des données par satellite entre BSC et BTS.

Dans la suite de la description, on parle de ressources radio : cette dénomination concerne alors la liaison de transmission radio par satellite, mais elle peut être étendue selon l'invention à tout autre type de liaison radio à ressources partagées, comme par exemple des liaisons par faisceaux hertziens (dits « microwave » en anglais), ou les sytèmes de type LMDS (« Local Multipoint Distribution Systems »), ou d'autres systèmes terrestres de transmission de type WiFi, WiMAX (pour « Wireless Microwave Access » en anglais), etc.

Très généralement, dans le cas qui nous intéresse, la transmission d'information entre la BTS est le BSC est donc assurée par une liaison radio à ressources partagées.

Classiquement, en relation avec la figure 3, dans les systèmes de l'état de la technique, la liaison satellite va utiliser une ressource de débit fixé pour chaque type de communication (typiquement de 16 kbit/s ou 8 kbit/s dans le GSM), utilisée pour acheminer aussi bien de la voix que des données.

La méthode la plus courante, à ressources statiques, consiste à réserver de manière permanente des ressources satellite pour transporter le nombre maximal de communications susceptible d'être présent à l'interface Abis. Une méthode plus efficace à ressources dynamiques est aussi parfois utilisée aujourd'hui, et consiste affecter et relâcher les ressources satellite au fur et à mesure de l'évolution du trafic effectif entre les BSC et les BTS. L'allocation dynamique des ressources radio satellite, correspondant en fait à des ressources de fréquence et de puissance sur un transpondeur de satellite, est en général contrôlée par un hub central, selon une méthode de type DAMA.

Le système DVB-RCS (pour « Digital Video Broadcasting-Return Channel by Satellite » en anglais) est un exemple de standard utilisé pour transmettre des données par satellite. Dans ce type de système, les données sont transmises en mode paquet, dans les deux sens de transmission.

Dans le sens « descendant », du hub vers les stations terminales, des canaux de diffusion au standard DVB-S (« Digital Video Broadcasting by Satellite ») sont utilisés et l'ensemble des liens BSC-BTS y sont multiplexés de façon temporelle. Dans le sens « montant », des stations terminales vers le hub, une gestion dynamique des ressources temporelles et fréquentielles est réalisée par le hub, selon le protocole DVB-RSC, pour :
- éviter les collisions entre les différentes sources se partageant le même transpondeur
- garantir un débit et un délai de transmission conformes à la qualité des communications requise..

La présente invention s'applique notamment aux configurations utilisant un canal satellite géré en mode DVB-S / DVB-RCS.

### 2.3 Les techniques d'optimisation de ressources radio

Un objectif majeur dans la mise en oeuvre de telles liaisons radio par satellite pour réaliser des liaisons d'infrastructure cellulaire est de réduire au maximum la bande nécessaire aux différentes transmissions, de façon à réduire les coûts. Il existe à ce jour plusieurs techniques connues.

De façon à optimiser l'allocation des ressources radio, il a été développé des techniques selon lesquelles on analyse les informations de signalisation contenues dans les trames TRAU, en cherchant ainsi à éviter la transmission d'information pendant les silences de la parole. De la même manière on peut tenir compte du fort taux d'inactivité sur les canaux de signalisation pour réduire encore le volume des informations échangées. Ces technologies, parfois décrites sous le nom de méthodes de « compression », analysent en ce qui concerne la parole les bits de contrôle encapsulés dans les trames destinées aux TRAU et aux BTSs. Une telle analyse permet de réduire le débit des canaux radio affectés car elle exploite le fait que les communications de parole ont un taux d'activité effectif généralement voisin de 50% (puisqu'il est rare qu'on parle et on écoute en même temps).

Enfin, au niveau de la gestion des ressources radio par liaison satellite, une technique répandue consiste à utiliser un système DAMA (pour « Demand Assigned multiple Access »). On note par ailleurs que certains systèmes satellite sont en « étoile » et connectent l'ensemble des stations terminales avec un hub central, alors que d'autres systèmes satellite sont « maillés » et permettent à n'importe quel utilisateur d'être directement mis en communication, en un seul bond satellite, avec n'importe quel autre quelque soit sa position dans le réseau et sans passer nécessairement par le hub central. Les systèmes satellite DAMA, en étoile ou maillés, optimisent la liaison satellite en allouant dynamiquement les ressources satellite à chaque noeud actif du réseau, selon la demande.

Par exemple, un réseau DAMA peut allouer dans certaines implémentations un canal de communication fixe à chaque appel, choisi parmi un « réservoir » (« pool » en anglais) de canaux. L'allocation des ressources est alors de type « circuit » à la demande pour chaque terminal. Ceci permet d'optimiser la capacité descendante et montante et donc d'augmenter le nombre d'utilisateurs sur un transpondeur déterminé...

Une autre technique d'optimisation d'allocation de ressources radio consiste à utiliser un mode « paquet » pour transmettre les informations sur le canal radio partagé et à implémenter un tampon (« buffer » en anglais).

Le buffer permet aussi de stocker un certain nombre de trames de parole de type TRAU, ou des paquets contenant des messages de signalisation, et d'envoyer ces trames en « rafale » sur une liaison à plus haut débit. La taille du buffer est donc typiquement un nombre de paquets, chacun correspondant à une trame de parole de 20 ms. Etant donné que certaines trames de parole correspondent en fait à des silences, et qu'il y a aussi un fort taux d'inactivité sur les voies de signalisation, la technique du buffer permet de bénéficier du facteur d'activité en n'envoyant que les paquets d'information significatifs, ce qui réduit d'autant la quantité de ressource radio utilisée. Cette technique a une efficacité maximale dans le sens descendant où un grand nombre de liaisons se partagent un canal de diffusion unique, mais elle est plus difficile à implémenter dans le sens montant où chaque liaison utilise des ressources spécifiques pour transmettre des informations vers le hub central.

### 3. Inconvénients de l'Art antérieur

L'inconvénient majeur des techniques de l'art antérieur réside dans le fait qu'elles restent coûteuses, du fait de la mise en oeuvre d'une liaison radio de type satellite généralement surdimensionnée, malgré les efforts déjà réalisés pour l'optimisation d'allocation de ressources radio avec la compression des échanges de trames TRAU de parole et des flux de signalisation selon les techniques présentées précédemment.

Les systèmes par satellite large bande, comme le DVB-RCS, présentent en fait l'inconvénient d'avoir été conçus essentiellement pour le transfert de données Internet, ne sont de ce fait pas bien optimisées pour des applications spécifiques à contraintes de temps réel telles que la voix.

En effet, le type de données à transmettre depuis ou vers Internet peut varier de façon importante, notamment en terme de taille des fichiers, mais aussi en ce qui concerne le contenu et la durée de communications. Du fait de cette diversité des types de données à transmettre, les systèmes satellites actuels savent difficilement garantir une qualité de service compatible avec la contrainte de temps réel, et en particulier un temps de transfert suffisamment faible et constant, sauf à majorer la ressource allouée par rapport aux besoins strictement nécessaires :
- soit de manière statique en allouant de façon permanente des circuits de parole sans tenir compte du trafic effectif des cellules
soit de manière dynamique en allouant pour chaque appel un canal radio satellite surdimensionné, sans tenir compte d'une connaissance fine de l'état exact de chaque communication et des besoins réels de transfert d'information à chaque étape des appels.

On observe par ailleurs que les systèmes par satellite actuels, à cause du temps de transfert assez long de l'ordre de 250 millisecondes pour un satellite géostationnaire, ne savent pas réagir rapidement à l'apparition et au relâchement des communications, ce qui a un impact non négligeable sur la qualité des communications perçue par les utilisateurs, sauf encore une fois à utiliser une sur-allocation des ressources radio.

### 4. Objectifs de l'invention

L'invention a notamment pour objectif de pallier ces différents inconvénients de l'état de la technique.

Plus précisément, un objectif de l'invention est de fournir une technique qui alloue de la façon la plus optimale possible les ressources radio nécessaires à l'établissement et au maintien de communications phoniques dans un réseau de type cellulaire et mettant en oeuvre une liaison de transmission radio, de type satellite notamment.

Un autre objectif de l'invention est de fournir une telle technique qui soit particulièrement adaptée au cas où la liaison de transmission radio est une liaison de type radio à ressources partagées entre au moins une station de base et au moins un contrôleur de station de base.

Un autre objectif de l'invention est de fournir une telle technique qui assure un gain important en termes de délai d'établissement des communications et de taux de succès des appels par rapport aux techniques classiques de l'art antérieur.

Un objectif supplémentaire de la technique de l'invention est de diminuer les coûts d'un système de communication, tout en maintenant une qualité de service équivalente, voir meilleure que celle obtenue avec les techniques classiques. Ainsi, un objectif de l'invention est de permettre à des régions rurales dans les pays émergents disposant de peu de moyens d'accéder au service GSM, dans de bonnes conditions économiques, comme le reste du monde.

L'invention a en outre pour objectif de fournir une technique qui soit adaptée au transfert de données pour les communications phoniques, c'est-à-dire pour le transfert de la voix et, plus généralement, au transfert de données en temps réel de type circuit, tout en étant aussi capable de transférer de manière efficace des données de nature plus impulsive, en mode paquet.

Un objectif supplémentaire de l'invention est d'être compatible avec la plupart des méthodes existantes d'optimisation de ressources radio, telles que notamment le passage en mode paquet IP, ou l'introduction de compresseurs éliminant les trames inutiles e silence.

L'invention a pour objectif supplémentaire de réduire au minimum le coût de la transmission sur voie radio, particulièrement dans le cas de la transmission sur satellite.

Un autre objectif de l'invention est d'améliorer la qualité de service en minimisant le temps d'établissement de bout en bout des communications, et en éliminant dès que possible les temps de transfert sur le canal radio partagé.

### 5. Exposé de l'invention

Ces différents objectifs, ainsi que d'autres qui apparaîtront par la suite, sont atteints à l'aide d'un procédé d'optimisation de l'allocation des ressources de transmission dans un réseau cellulaire de radiocommunications selon la revendication 1.

La prédiction de besoin de ressource tient compte par exemple du "mode" de trafic de la communication en cours de détection, et/ou des allocations précédentes, par exemple selon des lois d'optimisation telles que la loi d'Erlang. Cette prédiction peut également tenir compte des informations transitant par la voie "in-band" des communications concernées.

Dans le cas de la transmission des informations sur des canaux partagés en mode paquet, on peut aussi allouer une quantité incrémentale de ressource, par exemple en élargissant la taille des canaux utilisés en tenant compte du débit total déjà offert et de caractéristiques de qualité de service requises par l'ensemble des communications.

En fonction des résultats de son analyse de l'état du trafic sur le réseau cellulaire, le procédé prédit une quantité de ressources radio à allouer pour le maintien de toutes les communications nécessaires. Par la suite, le procédé s'adapte, par des allocations ou des relâchements de ressources radio, selon l'évolution des besoins de trafic.

L'invention repose alors sur une approche tout à fait nouvelle et inventive d'allocation dynamique de ressources radio particulièrement adaptée pour le transfert d'informations à forte contrainte de temps réel du type voix. Pour cela, l'invention propose d'allouer les ressources nécessaires uniquement après la réception d'un élément déclencheur, et en fonction d'une analyse pertinente de l'état du réseau cellulaire.

Dans le procédé de l'invention, l'allocation de ressource pilotée par le procédé peut concerner aussi bien des ressources de débit, que des ressources de fréquence, de puissance, des ressources de type circuit, ou des ressources adaptées au mode paquet (adresse, taille, file d'attente, priorités, etc).

Le procédé de l'invention s'applique aussi bien aux communications entre deux utilisateurs du réseau cellulaire, qu'aux communications entre un utilisateur du réseau cellulaire et un utilisateur du réseau téléphonique filaire classique, à l'extérieur du réseau cellulaire.

Une communication avec un abonné du réseau cellulaire se fait en utilisant une voie de trafic et des informations de signalisation. Ces dernières sont envoyées en parallèle dans la voie de trafic ou sous forme de messages dans des voies spécifiques de signalisation.

Plus précisément, l'invention analyse et espionne donc le contenu des messages de signalisation dans lesquelles elle détecte une information permettant de connaître l'activité exacte du réseau cellulaire ainsi que les besoins en ressources radio.

Ces messages de signalisation sont initialement destinés et spécifiques aux équipements relatifs au réseau cellulaire. Le procédé « intercepte » donc ces messages et lit leur contenu pour en déduire une allocation optimale des ressources de transmission radio. De plus, cette analyse et détection est réalisée de façon totalement transparente vis-à-vis des contrôleurs de stations de base et des stations de base elles-mêmes, le réseau cellulaire n'étant absolument pas au courant que ces messages de signalisation sont exploités. Ainsi, le procédé de l'invention s'implémente aisément dans tout type de réseau cellulaire, sans aucune intervention sur ce dernier.

En d'autres termes, contrairement aux techniques classiques de l'art antérieur, selon lesquelles l'allocation de ressources se fait soit de manière permanente quel que soit le trafic, soit avec une sur-allocation de ressources dès qu'un besoin de transport d'information est détécté, l'invention propose de tout d'abord analyser finement l'état des communications en cours, pour allouer en conséquence, et de façon optimisée, les ressources nécessaires à cette communication. Ainsi, on évite le risque que des ressources radio soient allouées trop tôt alors qu'elle n'ont pas lieu de l'être, et de gaspiller ces ressources, ou trop tard avec un impact anacceptable sur la qualité de service

On gagne alors en termes de coût et de délai d'établissement, tout en maintenant une qualité de service équivalente, voir meilleure que celle obtenue avec les implémentations classiques.

De façon avantageuse, la phase d'analyse comprend une étape supplémentaire pour détecter si les terminaux mobiles de la communication se situent en aval de la même terminaison de la liaison radio à ressources partagées, selon une stratégie de détection incluant une étape d'analyse de tout ou partie des messages de signalisation, ainsi éventuellement que des données échangées entre les terminaux mobiles, et comprend une troisième phase de déclenchement d'une opération de bouclage local de tout ou partie des données échangées entre les terminaux mobiles, sans réservation d'une voie de trafic au sein des ressources radio, dans le cas où la phase de détection confirme que l'appelant et l'appelé de la communication se situent en aval de la même terminaison de la liaison radio à ressources partagées, la troisième phase étant alors prioritaire par rapport à la seconde phase.

Dans un mode de réalisation préférentiel, l'invention effectue un bouclage direct du flux de données échangées entre un appelant et un appelé lorsque ceux-ci sont localisés dans une même zone locale.

Plus précisément, l'invention met en oeuvre une stratégie de détection selon laquelle elle cherche dans la succession des messages de signalisation une information représentative de ce que deux utilisateurs sont situés dans une même zone locale. En fonction des résultats de cette analyse, le procédé de l'invention reboucle les données à transmettre pendant une communication, si cette dernière présente un caractère local.

Le fait que certaines données soient bouclées permet d'éviter de les faire remonter jusqu'au contrôleur de stations de base, et donc de les faire transiter inutilement par la liaison radio, qui est coûteuse. Le temps de transfert de l'information s'en trouve aussi considérablement réduit dans le cas de liaisons par satellites géostationnaires, ce qui a un impact important sur la qualité perçue par les utilisateurs dans le cas de communications téléphoniques.

De façon avantageuse, les messages de signalisation continuent à être acheminés normalement même en cas de bouclage local.

Le fonctionnement « classique » du réseau cellulaire n'est alors pas perturbé.

Avantageusement, l'information indicative d'une activité de trafic est constituée par un message de signalisation indicatif des caractéristiques des besoins d'allocation de ressource dans la liaison entre la station de base et un terminal mobile appelant, ou la station de base et un terminal mobile appelé.

Le procédé selon l'invention « récolte » l'information relative à l'état de trafic du réseau en lisant le contenu de messages spécifiques de signalisation transitant à la fois entre l'appelant et sa station de base correspondante, ainsi que les messages de signalisation transitant entre l'appelé et sa station de base correspondante.

De façon avantageuse, la seconde phase comprend une étape supplémentaire de recherche et de détection, dans les messages de signalisation, d'une information indicative d'une cessation d'un besoin de trafic, le procédé comprend une quatrième phase de relâchement de ressources préalablement allouée au sein de la liaison radio à ressources partagées en fonction de l'information indicative d'une cessation d'un besoin de trafic.

Le procédé de l'invention, de par son analyse pertinente des besoins de ressources pour le trafic des données, est aussi bien en mesure d'allouer des canaux de communication, que d'en libérer, selon l'évolution du trafic et de la charge du réseau.

Avantageusement, l'allocation de ressources au sein de la liaison radio à ressources partagées consiste à réserver une ressource de communication élémentaire à débit prédéterminé au sein des ressources radio partagées, parmi une pluralité de ressources élémentaires réservables individuellement.

Une ressource de communication élémentaire représente par exemple un canal d'un débit de 16 kbit/s pour la phonie plein débit (FR) ou 8 kbit/s à demi débit (HR)

La première phase peut aussi tenir compte de la signalisation « in band » de contrôle qui transite dans les voies de trafic, à l'instar des procédés de compression expliqués précédemment exploitant le contenu des trames TRAU. Ainsi l'allocation des ressources de la deuxième phase peut tenir compte des caractéristiques fines des échanges, par exemple en optimisant la quantité de ressources affectées en tenant compte de la nature du codage, du taux d'activité de la parole, etc.

Dans un mode de réalisation particulier, la voie de trafic de la communication achemine des données à contraintes de temps réel, tel qu'un flux de parole.

Le procédé de l'invention est particulièrement bien adapté au contexte particulier de la phonie.

Le procédé de l'invention comprend une étape de prédiction prévoyant de réserver un débit de 16 kbits/secondes en mode Full Rate et/ou de 8kbits/secondes en mode Half Rate.

Avantageusement, les messages de signalisation sont conformes au standard GSM, et l'information indicative d'un besoin de trafic est la réception du message « ACTIVATE ».

De façon avantageuse, les messages de signalisation sont conformes au standard GSM, et l'information indicative de la fin d'un besoin de trafic est la réception du message « RF CHANNEL RELEASE».

Le procédé de l'invention exploite ainsi l'existence de messages prédéfinis, tels que ceux qu'on trouve dans le standard GSM.

Il est clair que l'invention s'applique à tout type de réseau cellulaire dans lequel on trouve l'existence de ce type de messages de signalisation : UMTS, et plus généralement toutes les évolutions du standard GSM.

De façon avantageuse, la liaison radio à ressources partagées est de type liaison satellite, avec une gestion centralisée des ressources partagées de type DAMA (« Demand Assigned Multiple Access).

De plus, le procédé de l'invention peut aussi être mis en oeuvre pour optimiser l'allocation des canaux d'une liaison à ressources partagées situées entre le BSC et le MSC d'un réseau cellulaire de type GSM ou équivalent.

L'optimisation pourra ainsi être réalisée avec des ressources radio partagées assurant la transmission sur l'interface Ater, qui présente des caractéristiques de codage de la parole similaires à celles de l'interface Abis, ou sur l'interface A qui véhicule des signaux de paroles non compressés à 64 kbit/s. Dans le cas de ces interfaces, l'analyse de l'état du trafic se fera à partir des messages échangés sur l'interface MSC-BSC

Avantageusement, la première phase inclut une étape supplémentaire d'analyse des informations « in band » de contrôle qui transitent dans la voie de trafic et elle permet de tenir compte dans l'allocation des ressources radio d'autres informations concernant le type de codage utilisé, le taux d'activité de la parole, etc.

L'invention concerne également un réseau cellulaire selon la revendication 12.

Avantageusement, dans un tel réseau cellulaire, les fonctions de mise en oeuvre des phases et des étapes sont localisées dans au plus trois dispositifs adaptateurs localisés dans le réseau, et les adaptateurs appartiennent au groupe comprenant :
- un premier adaptateur situé au niveau de la ou des stations de base ;
- un second adaptateur situé au niveau de l'équipement central de gestion des ressources radio partagées ;
- un troisième adaptateur situé au niveau du contrôleur de la ou des stations de base.

En d'autres termes, le procédé de l'invention est mis en oeuvre par un ensemble de dispositifs, qu'on appelle adaptateurs. Ces adaptateurs contiennent alors les moyens de mettre en oeuvre le procédé d'optimisation tel que décrit, c'est-à-dire qu'ils sont en mesure d'analyser les messages de signalisation, et de demander l'allocation ou le relâchement de ressources de transmission radio.

Dans un mode de réalisation particulier, le réseau cellulaire comprend trois types d'adaptateurs, localisés respectivement à proximité des stations de base, à proximité de l'équipement central de radiocommunication (Hub satellite par exemple) et enfin à proximité du (ou des) contrôleur(s) de stations de base. Chacun des adaptateurs est alors capable, selon le besoin et le mode d'exploitation choisi, de lire et analyser les messages spécifiques au type de liaison ou d'interface sur laquelle ils sont disposés.

Bien évidemment, ces emplacements ne sont pas limitatifs, et l'invention s'applique à tout réseau comprenant au moins l'un de ces adaptateurs, dont l'emplacement sera lié au besoin spécifique d'optimisation de ressources, selon le mode de réalisation choisi.

De façon avantageuse, un tel réseau comprend aussi des moyens d'opération et de maintenance des adaptateurs. Ces moyens communiquent avec chacun des adaptateurs de façon à configurer et superviser les adaptateurs.

Ainsi, par exemple, l'équipement d'opération et maintenance central peut configurer les adaptateurs à distance pour activer ou non certains modes de fonctionnement particuliers. On peut ainsi activer ou non certains modes de détection, sur tel ou tel type de signalisation, et on peut paramétrer les algorithmes d'allocation des ressources des adaptateurs.

L'équipement d'opération et maintenance est aussi capable de détecter des alarmes indiquant des défauts de fonctionnement éventuels des adaptateurs.

L'équipement d'opération et maintenance est aussi en charge de collecter des observations de trafic et de qualité de service (durée, taux de succès des appels, etc), qui permettront de vérifier le bon fonctionnement du dispositif et de mesurer en particulier que l'optimisation des ressources de transmission radio se fait tout en garantissant une bonne qualité du service. Il est possible aussi que les observations réalisées par l'ensemble du dispositif soient utilisées pour déterminer certains éléments de facturation, par exemple en tenant compte du caractère local éventuel des communications.

Un tel réseau cellulaire est du type comprenant au moins une station de base BTS contrôlée par un contrôleur de stations de base, nommé BSC, et un réseau de connexion entre la ou les BTS et ledit BSC, le réseau de connexion incluant au moins une liaison de type radio à ressources partagées en amont de la ou les BTS. Selon l'invention, un tel réseau cellulaire comprend des premiers moyens d'adaptation A1 reliés d'un côté à la ou les BTS par une interface de type El, et de l'autre côté à un équipement de terminaison de ladite liaison radio.

Les fonctions de l'adaptateur A1, selon l'invention, sont en particulier mais non exclusivement les suivantes :
- analyse des messages de signalisation échangés avec la ou lesdites BTS et/ou des informations de contrôle in-band dans les voies de trafic ;
- analyse d'un besoin de bouclage local et/ou déclanchement d'une opération de bouclage local ;
- communication avec un équipement central d'opération de maintenance.

L'adaptateur A1 est donc en mesure d'analyser le besoin d'établissement ou de relâchement de ressources de transmission radio qui peut être en option commandé localement au terminal radio, ou qui peut être relayé vers (ou réalisé directement par) un autre adaptateur proche de l'équipement central de contrôle des ressources radio. Un tel adaptateur peur aussi analyser un besoin de bouclage, de ses caractéristiques exactes (quel canal, quel TS, quel TRX de la BTRS, etc.) et la mise en oeuvre de celui-ci, ainsi que les opérations de débouclage lorsque nécessaire. Il communique avec l'équipement central d'opération et maintenance

Avantageusement, le réseau de connexion incluant au moins une seconde liaison de type Internet Protocol (IP), le réseau de l'invention comprend :
- des seconds moyens d'adaptation A2 situés entre la liaison radio de transmission et la liaison de type IP ;
- des troisièmes moyens d'adaptation A3 situés entre le réseau de type IP et le contrôleur de stations de base ;

Les données de trafic et de signalisation sont alors transportées par paquets selon le protocole Internet IP standard entre les seconds et troisièmes moyens d'adaptation.

Dans un mode de réalisation, l'invention s'applique à un réseau cellulaire dans lequel une liaison entre un contrôleur de stations de base et une station de base est supportée non seulement par une liaison de type radio à ressources partagées, mais aussi en implémentant les protocoles Internet de type IP.

Dans un mode de réalisation, l'information échangée entre les premiers et seconds moyens d'adaptation A1 et A2, utilisant le réseau radio à ressources partagées, ne transporte pas les « overheads » nécessaires au protocole IP, lesquels n'étant introduits qu'entre A2 et A3.

On gagne là aussi en ressources radio nécessaires.

Dans un autre mode de réalisation l'adaptateur A1 utilise les « overheads » nécessaires au protocole IP et en conséquence :
- A1 peut communiquer directement avec A3 selon le protocole IP ;
- A2 peut ne pas être introduit dans le réseau de connexion.

En d'autres termes, l'ensemble des champs nécessaires au protocole IP sont ajoutés dès l'interface A1, ce qui permet d'utiliser la liaison radio (par satellite) strictement dans un mode IP et de continuer facilement en mode IP jusqu'à l'adaptateur A3. Cette méthode est sous-optimale en terme d'utilisation de la ressource radio, mais elle a l'avantage de pouvoir éventuellement éviter d'introduire le second adaptateur A2.

Dans un mode de réalisation préférentiel, la liaison radio à ressources partagées met en oeuvre un satellite, par exemple géo-stationnaire.

On note que les mêmes principes peuvent s'appliquer aussi avec des solutions satellites différentes de type LEO « Low Earth Orbit », MEO « Medium Earth Orbit », etc.

Un adaptateur selon une exemple constitue notamment un adaptateur A2 et remplit notamment au moins une des fonctions appartenant au groupe de fonctions suivantes :
- conversion des signaux transitant à l'interface radio/IP, dans un sens ou dans l'autre notamment :
   ∘ ajout/retrait aux signaux transmis de tous les éléments de protocole nécessaires au transport IP ;
   ∘ optimisation de la liaison radio en mode « paquet » le plus simple possible, sans les éléments liés au protocole IP ;
- mise en oeuvre des phases d'analyse de messages de signalisation et/ou d'allocation ou de non-allocation de ressources au sein de la liaison radio à ressources partagées ;
- analyse d'un besoin et/ou déclenchement d'une opération de bouclage local et/ou vérification permanente d'un besoin de « non bouclage »par message interne spécifique ;
- transfert de l'information de parole reçue de l'interface A1 BTS/radio vers l'interface A2 radio/IP pour reconstitution d'une information de parole cohérente au BSC afin de satisfaire aux exigences d'écoute légale.

Un adaptateur peut en outre constituer un adaptateur A3, et remplir notamment au moins une des fonctions appartenant au groupe de fonctions suivantes :
- conversion des signaux transitant à l'interface A3 IP/BSC, dans un sens ou dans l'autre, notamment :
   ∘ ajout/retrait aux signaux transmis de tous les éléments de protocole nécessaires au transport IP ;
   ∘ reconstitution d'une interface Abis standard avec le BSC ;
- génération d'un flux de parole virtuel, par exemple un flux aléatoire, pour alimenter le BSC en cas de bouclage local ;
- reconstitution d'une information de parole cohérente au BSC, sur la base d'une information de parole de l'interface A1 BTS/radio, afin de satisfaire aux exigences d'écoute légale ;
- reconstitution, le cas échéant, d'une information de parole cohérente.

Dans un de ses modes de réalisation, un tel adaptateur est intégré à un dispositif de contrôle de la liaison à ressources partagées.

Les fonctions des adaptateurs A2 et A3 peuvent en outre être confondues dans un même équipement..

Dans un mode de réalisation, un adaptateur comprend les premiers moyens d'adaptation A1 de sorte que ceux-ci sont intégrés dans la station de base.

En d'autres termes, dans un des modes de réalisation de l'invention, les stations de base du réseau cellulaire selon l'invention comprennent elle-mêmes des moyens d'analyse des messages de signalisation et d'optimisation d'allocation des ressources radio, et mettent ainsi en oeuvre le procédé d'optimisation selon l'invention.

Enfin, dans un mode de réalisation particulier, un adaptateur comprend les troisièmes moyens d'adaptation A3 de sorte que ceux-ci sont intégrés dans le contrôleur de stations de base.

### 6. Liste des figures

D'autres caractéristiques et avantages de modes de réalisation de l'invention apparaîtront à la lecture de la description suivante d'un mode de réalisation préférentiel de l'invention, donné à titre d'exemple indicatif et non limitatif (tous les modes de réalisation de l'invention ne sont pas limités aux caractéristiques et avantages de ce mode de réalisation préférentiel), et des dessins annexés, dans lesquels :
- la figure 1, déjà présentée en relation avec l'art antérieur, illustre l'architecture du réseau GSM ;
- la figure 2, déjà introduite dans la partie art antérieur, schématise les interfaces mises en oeuvre dans un réseau cellulaire GSM ;
- la figure 3 concerne la mise en oeuvre d'une liaison radio par satellite dans un réseau GSM, selon l'état de la technique ;
- la figure 4 illustre la configuration générale de l'invention ;
- la figure 5 présente un premier mode de réalisation de l'invention, dans lequel un bouclage mono-cellule de la parole est mis en oeuvre ;
- la figure 6 présente un second mode de réalisation de l'invention dans lequel un bouclage multi-cellule de la parole est mis en oeuvre ;

### 7. Description d'un mode de réalisation particulier

### 7.1 Principe général

La présente invention repose ainsi sur une approche tout à fait nouvelle et inventive d'optimisation de l'allocation des ressources radio. Le principe général repose pour cela sur l'analyse de la voie de signalisation des signaux GSM (et ses extensions et améliorations) en fonction de laquelle sont déterminés les canaux radio à allouer.

On note alors que ceci diffère nettement des techniques de l'art antérieur dans lesquelles on attribue systématiquement des ressources radio dès qu'un besoin de transfert d'information est détecté par le système de transmission radio par satellite.

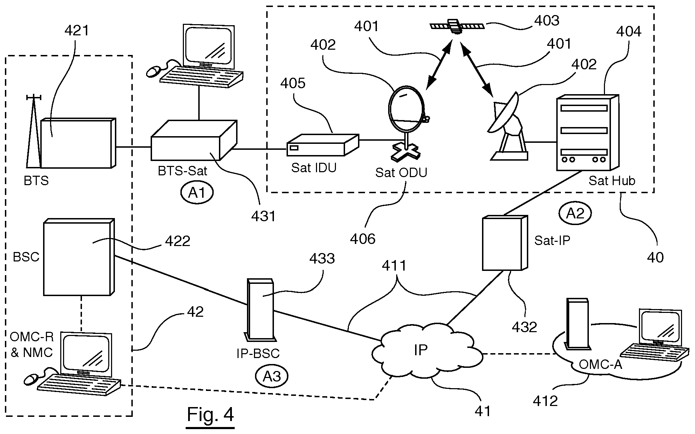

En relation avec la figure 4, la configuration générale dans laquelle est mise en oeuvre l'invention, dans un mode réalisation préférentiel, comprend trois entités principales :
- une réseau 42 cellulaire de type GSM;
- une liaison 40 radio à allocation dynamique de ressources dynamiques et partagées de type DAMA;
- un réseau 41 Internet fonctionnant selon le protocole Internet IP.

Plus précisément, le réseau 42 cellulaire comprend, de façon classique, au moins une station de base 421 (BTS dans le cas particulier du GSM) contrôlée par un contrôleur 422 de stations de base (BSC dans le cas particulier du GSM). La BTS et la BSC communiquent donc par un canal qu'on désigne par BTS-BSC, ou encore interface Abis (décrite en préambule de la présente description).

Dans la configuration illustrée par la figure 4, ce canal est supporté par deux types de liaisons : une première liaison radio par satellite 401, assurée par deux antennes 402 d'émission-réception et un satellite 403 géo-stationnaire, et une seconde liaison 411 selon le protocole Internet IP.

Au niveau de la liaison radio, un dispositif 404 appelé « Hub » est en charge d'allouer les ressources radio nécessaires, via le satellite 403, pour l'acheminement des données trafic à transmettre entre BSC 422 et BTS 421.

Le Hub fonctionne en communiquant avec un dispositif 406 ODU (pour « Outdoor Unit » en anglais) et un équipement 405 IDU (pour « Indoor Unit » en anglais).

La présente invention permet alors de réaliser et maintenir le canal BTC-BSC précédemment cité.

Pour ce faire, l'invention est mise en oeuvre, dans un mode de réalisation préférentiel, à trois niveaux d'interface :
- une première interface BTS/Satellite ;
- une seconde interface satellite/IP ;
- une troisième interface IP/BSC.

On rappelle que, classiquement, le BSC communique avec la ou les BTS qui en dépendent en transmettant d'une part des données de signalisation, via des voies de signalisation, et des données de trafic, contenant les données utiles, via une voie de trafic.

L'invention consiste alors à analyser les données de signalisation, tout en les transmettant, pour en déduire les ressources radio à allouer à la liaison satellite. En d'autres termes, on « espionne » les messages et les informations de contrôle, qui ne sont pas à l'origine destinés au système satellite, mais dont le contenu est analysé de façon à optimiser les ressources radio à allouer.

Plus précisément, l'invention peut être mise en oeuvre par trois dispositifs 431, 432, 433, qu'on nomme adaptateurs, situés à chacune des interfaces citées précédemment, et dont la caractéristique principale est d'observer et d'analyser le contenu des signalisations initialement destinées aux entités comprises dans le réseau cellulaire.

Dans un mode de réalisation particulier, l'adaptateur 431 A1 peut faire partie intégrante de la BTS.

L'échange des données au niveau des interfaces liées au réseau cellulaire, est généralement de type circuit, ou « circuit virtuel », du fait que les données à transmettre correspondent principalement à de la voix, nécessitant un délai court et très peu variable. Cependant, ces même données sont transformées pour être échangées sous forme paquets sur les liaisons satellite 401 et IP 41. Les adaptateurs 431 et 433 ont donc pour fonction de transformer ces données du mode circuit ver le mode paquet et réciproquement.

Enfin, le système échange de plus des paquets d'information internes entre chacun des adaptateurs 431, 432, 433 et avec l'OMC-A 412. L'OMC-A implémente ainsi les fonctions d'opération et maintenance liées à la configuration et à la supervision (alarmes, trafic) des adaptateurs.

L'invention réside alors dans le fait que les ressources radio sont allouées dynamiquement par les adaptateurs 431 et/ou 432, en fonction des résultats de leur analyse des contenus des voies de signalisation initialement uniquement destinées au BSC 422 ou à la BTS 421. Le système, grâce au traitement des adaptateurs, détecte alors l'état exact des communications et détermine avec cette information une allocation optimale des ressources radio.

Plus précisément, dans le cas particulier d'un flux d'information de parole, un canal radio bi-directionnel est alors alloué par le système entre les adaptateurs 431 et 432, lorsque ce dernier a détecté qu'une communication devient effectivement active entre la BTS 421 et le BSC 422, et ce grâce à l'analyse de la voie de signalisation.
Dans un premier mode de réalisation, l'invention prédit alors, en fonction de ce qui est détecté et analysé dans l'ensemble des voies de signalisation, une quantité de ressources incrémentales à attribuer.
On voit ici que la technique de l'invention se différencie des techniques classiques de l'état de l'art en ce que les ressources ne sont allouées que si et lorsqu'un besoin réel a été détecté, c'est-à-dire seulement à partir de la réception d'une information signalant qu'une communication est effectivement active. Ceci diffère des techniques de l'état de l'art dans lesquelles les ressources radio sont généralement allouées dès l'arrivée d'une information quelconque à l'interface avec le terminal radio : ainsi, par exemple, avec les techniques par satellite même réalisées en mode paquet IP, on établit classiquement un circuit (virtuel) de phonie sur le satellite pendant toute la phase de signalisation d'appel et de relâchement. Ceci peut être très pénalisant pour des communications de courtes durées, et particulièrement si finalement l'appel n'aboutit pas après la phase de signalisation.

La transmission des données entre les deux interfaces A2 et A3 se fait selon le protocole IP standard. Les deux adaptateurs 432 et 433 de l'invention situés au niveau de ces deux interfaces présentent donc la caractéristique d'ajouter aux signaux transmis tous les éléments de protocole nécessaires au transport optimal.

En effet, dans les implémentations actuelles dans lesquelles l'interface Abis est supportée avec un transport IP et sur une liaison radio, l'interface A1 BTS/Sat utilise classiquement un dispositif qui génère vers le terminal IDU 405 des paquets strictement au format IP. Ces derniers sont ensuite transportés par satellite puis par Internet jusqu'à l'interface IP/BSC, sans traitement intermédiaire par un équipement de type adaptateur 432.

Les inventeurs ont néanmoins constaté que ce système est sous-optimal car il introduit des champs d'information supplémentaires (« overhead » en anglais) très importants et pénalisants sur la voie radio par satellite. Cette dégradation peut résulter en un surcoût d'utilisation des ressources radio (satellite) jusqu'à 100%.

Le simple fait d'introduire alors l'adaptateur 432 au niveau de l'interface Sat/IP présente donc un caractère innovant, puisqu'il permet d'optimiser la liaison radio en mode « paquet » le plus simplement possible, sans les éléments liés au protocole IP, et cet adaptateur intermédiaire est totalement inexistant dans les implémentations actuelles.

Dans un mode de réalisation particulier, les fonctions de l'adaptateur 432 peuvent faire partie intégrante du dispositif chargé du contrôle de ressources radio satellite.

### 7.2 Bouclage de la parole mono-cellule

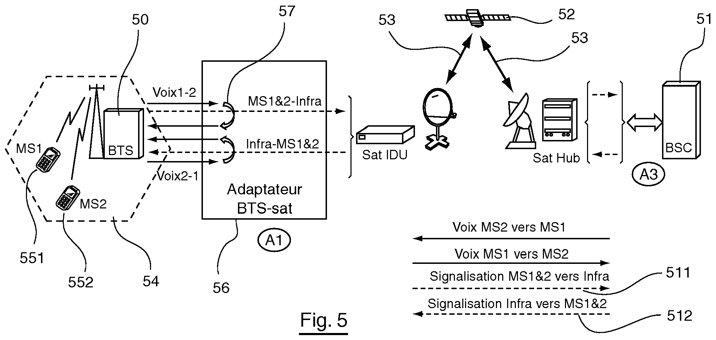

Dans une de ses mises en oeuvre particulière et avantageuse, le système détecte qu'un échange de parole a lieu entre deux mobiles présents dans une zone géographique couverte par une même BTS. On décrit ce mode de réalisation de l'invention en relation avec la figure 5.

Deux utilisateurs situés dans la même cellule 54 du réseau cellulaire couverte par la BTS 50 sont en communication via leurs terminaux mobiles respectifs 551 et 552. Les inventeurs ont alors constaté que dans une telle configuration, la réalisation usuelle demande que le flux de parole passe par le BSC, et remonte même jusqu'au MSC du système GSM, entraînant le délai de transmission correspondant. Une communication locale souffre alors de deux fois le délai de transmission satellite.

L'invention propose alors de détecter qu'un échange de parole à lieu entre deux mobiles dépendant de la même BTS, et, le cas échéant, n'alloue pas de ressource radio bidirectionnelle sur la liaison satellite pour transporter des paquets de trafic de type parole. On économise ainsi des ressources radio et on réduit de manière importante le temps de transfert des communication.

L'adaptateur 56 au niveau de l'interface BTS/Satellite qui effectue alors un bouclage 57 local des paquets de trafic.

Dans le mode de réalisation particulier illustré par la figure 5, les moyens mis en oeuvre pour effectuer le bouclage sont intégrés dans l'adaptateur 56. Cependant, on envisage, dans un autre mode de réalisation, que les moyens de mise en oeuvre pour effectuer le bouclage soient directement intégrés à la BTS.

Les inventeurs ont identifié plusieurs moyens de détecter le caractère local d'un appel : en analysant le contenu du signal de parole lui-même, c'est-à-dire les données de trafic, ou bien en analysant le contenu des messages de signalisation.

### 7.3 Bouclage de la parole multi-cellule

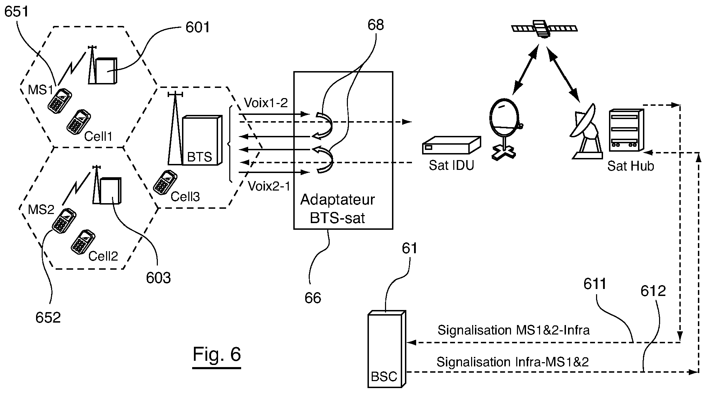

En relation avec la figure 6, l'invention met aussi en oeuvre un bouclage 68 de la parole, au niveau de l'interface BTS/Satellite, via l'adaptateur 66, lorsque l'appelant 652 et le destinataire 651 sont chacune dans des BTS différentes 601 et 602, mais dépendant de la même terminaison radio et donc du même adaptateur 66 BTS/Satellite.

Pour plus de détails concernant la mise en oeuvre du bouclage local, l'homme du métier pourra se référer à la demande de brevet déposée à la même date que la présente demande de brevet, par le même demandeur, ayant pour titre « Procédé d'optimisation des ressources de transmission par bouclage local dans un réseau cellulaire de radiocommunication mobile, récepteur et adaptateur de réseau correspondants ».

### 7.4 Gestion des transferts intercellulaires (« handovers »)

Du fait de son caractère d'allocation dynamique des ressources radio, le système selon l'invention optimise les ressources radio lors des déplacements des utilisateurs. En effet, il est classique qu'un utilisateur du réseau se déplace en cours de communication, et passe ainsi dans une zone géographique couverte par une BTS différente de celle gérant le début de la communication par exemple.

Le système de l'invention vérifie alors, en permanence et de façon continue, la localisation des utilisateurs, en espionnant le contenu des voies de signalisation 511, 512 (en relation avec la figure 5), 611, 612 (en relation avec la figure 6) échangées entre BTS et BSC selon le standard GSM, et contenant les informations relatives au besoin de données de trafic.

Deux cas de figure se présentent :
- les deux utilisateurs en communication sont initialement localisés de façon qu'un bouclage mono-cellule ou multi-cellule est mis en oeuvre, puis l'un de deux utilisateurs change de zone (handover sortant);
- aucun bouclage n'est initialement mis en oeuvre et l'un des deux utilisateurs change de zone, de façon qu'il est possible d'activer un bouclage mono ou multi-cellule (handover entrant).

Dans le premier cas de figure, on rappelle qu'aucune ressource radio bidirectionnelle n'est allouée, puisqu'on est dans un cas de bouclage. La vérification permanente du système de besoin de « non bouclage » est faite par exemple par l'adaptateur 431 (en relation avec la figure 4), situé au niveau de l'interface BTS/Satellite, qui informe l'adaptateur 432 situé à l'interface Satellite/IP, par message interne. L'interface Satellite/IP commande alors le dispositif 404 hub en lui signalant les ressources radio nécessaires à affecter. Cette commande est réalisée dès que l'adaptateur 431 situé à l'interface BTS/Satellite détecte la présence de l'élément ACTIVATE.

### 7.5 Traitements au sein de BTS/Satellite et Satellite/IP

Classiquement, dans le cas particulier du standard de transmission par satellite DVB-RCS, c'est un équipement terminal satellite dit IDU (pour « Indoor Unit » en anglais) 405 en relation avec la figure 4, qui est chargé de faire une demande d'allocation au Hub 404, portant la fonction de centre de contrôle de réseau (NCC pour « Network Control Center » en anglais) du standard, ce dernier ayant notamment pour rôle de contrôler les ressources radio.

Dans ce cas de figure, dès que l'adaptateur 431 situé au niveau de l'interface BTS/Sat détecte la présence du message ACTIVATE dans la voie de signalisation, il commande alors au dispositif IDU 405 une action de réservation de ressources radio. Celle-ci sera de nature à permettre un flux de parole régulier, soit à plein régime (« Full Rate »), à un débit de 16 kbits/s., soit à demi-régime (« Half Rate »), à un débit de 8 kbits/s.

En reprenant la terminologie du standard DVB-RCS, le canal radio alloué sera donc soit de nature CRA (pour « Continuous Rate Assignment » en anglais), soit de nature RBDC (pour « Rate Based Dynamic Capacity » en anglais).

Dans un troisième mode de réalisation, l'activation d'une réservation de ressources radio est faite directement au niveau du dispositif Hub 404. C'est donc l'adaptateur 432 situé au niveau de l'interface Satellite/IP qui détecte la présence de l'élément ACTIVATE dans la voie de signalisation, dédiée initialement au BSC et à la BTS, et qui commande l'adaptateur 432. Les inventeurs ont noté que, dans ce dernier mode de réalisation, l'activation des ressources radio est plus rapide, car elle évite un délai de transmission de l'IDU 405 vers le Hub 404.

La technique de l'invention permet alors de gérer des changements de situation, en cours de communication, sans aucune perte d'information : la qualité de service reste excellente.

En d'autres termes, dans le cas d'une communication intra-BTS, ou intra-cellule, si les conditions de communication locales évoluent, par exemple à l'occasion d'un changement de cellule d'un des deux mobiles en communications, le système est capable de rétablir une communication bidirectionnelle classique selon le chemin des trois interfaces BTS/Satellite-Satellite/IP-IP/BSC, sans aucune perte d'information, telles que la parole par exemple.

La technique de l'invention vérifie donc en permanence l'état du trafic, en surveillant dans les voies de signalisation l'arrivée d'éléments (tels que les messages ACTIVATE ou RF CHANNEL RELEASE notamment) qui déclenchent une action de réservation ou de relâchement de ressources radio.

### 7.6 Remontée optionnelle du signal vocal

On rappelle que, selon l'invention, lorsqu'une communication de parole est détectée comme présentant un caractère local, aucune ressource radio n'est allouée sur la liaison satellite, économisant ainsi des ressources satellites.

Dans le mode normal de réalisation, de façon à ce que le système soit conforme au système GSM, l'adaptateur situé au niveau de l'interface IP/BSC, c'est-à-dire entre le réseau IP et le BSC, génère un flux de parole virtuel, par exemple un flux aléatoire, pour alimenter le BSC qui ne connaît pas l'existence d'un bouclage local.

Cependant, il peut être nécessaire de devoir satisfaire les exigences d'écoute légales, et donc de devoir remonter le signal de parole effectivement jusqu'au niveau du BSC, aussi bien dans le cas du bouclage local multi-cellule que dans le cas du bouclage local mono-cellule.

Pour ce faire le système établit une liaison unidirectionnelle, laquelle transporte l'information de parole de l'interface BTS/Sat vers l'interface Sat/IP. Ceci permet alors à l'interface IP/BSC de reconstituer une information de parole cohérente au BSC.

### 7.7 Généralisation

Bien entendu, l'invention n'est pas limitée aux exemples de réalisation mentionnés ci-dessus.

En particulier, l'Homme du Métier pourra apporter toute variante dans l'emplacement et le fonctionnement des trois types d'adaptateurs de l'invention selon les caractéristiques de la liaison entre BTS et BSC. Il se peut par exemple qu'il n'y ait aucune liaison IP mise en oeuvre et qu'un BSC soit directement en communication avec ses BTS par liaison radio. Dans ce cas, le BSC est localisé au contrôleur des équipements radio et il n'y a aucune nécessité de transporter l'information sur IP et les fonctions des adaptateurs situés au niveau des interfaces Satellite/IP et IP/BSC peuvent être confondues dans un même équipement.

Enfin, même si le mode de réalisation décrit ici met en oeuvre une liaison radio par satellite, l'Homme du Métier saura transposer les principes et techniques de la présente invention à tout système à ressources radio utilisé pour connecter des BTS, tels que par exemple des liaisons par faisceaux hertziens (dits « microwave » en anglais), ou les sytèmes de type LMDS (« Local Multipoint Distribution Systems »), ou d'autres systèmes terrestres de transmission de type WiFi, WiMAX (« Wireless Microwave Access » en anglais), etc..

En conclusion, les mécanismes présentés ici permettent de minimiser la ressource radio utilisée, particulièrement coûteuse dans le cas d'utilisation de liaison satellite, tout en maximisant la qualité de service rendue en minimisant le temps de transit, très perceptible dans le cas d'utilisation d'un satellite géostationnaire.

## Revendications

1. Procédé d'optimisation d'allocation de ressources dans un réseau cellulaire de radiocommunications mobiles, ledit réseau cellulaire comprenant au moins une station de base, nommée BTS (421), contrôlée par un contrôleur de stations de base, nommé BSC (422), et un réseau de connexion connectant la ou lesdites BTS avec ledit BSC, le procédé étant du type consistant à établir, maintenir et terminer des communications avec des terminaux mobiles dudit réseau cellulaire,
l'établissement, le maintien et la terminaison desdites communications mettant en oeuvre des échanges de messages de signalisation,
ledit réseau de connexion incluant au moins une liaison (401) de type radio à ressources partagées entre la ou lesdites stations (421) de base et ledit contrôleur (422) de stations de base, le procédé comprenant les phases suivantes :
- une première phase d'analyse du contenu de tout ou partie desdits messages de signalisation, ladite phase d'analyse incluant une étape de recherche et détection dans ledit contenu desdits messages de signalisation d'informations indicatives d'une activité de trafic ;
- une seconde phase d'allocation ou de non-allocation de ressources au sein de ladite liaison (401) radio à ressources partagées en fonction desdites informations indicatives d'une activité de trafic,
ledit procédé étant **caractérisé en ce que** ladite liaison radio à ressources partagées est constituée d'une pluralité de canaux de transmission réservables de façon incrémentale, et **en ce que** le procédé comprend une prédiction de besoin de ressource radio qui tient compte des ressources radio déjà allouées dans ladite liaison radio à ressources partagées et une adaptation des ressources de ladite liaison radio selon la prédiction.

2. Procédé d'optimisation selon la revendication 1, **caractérisé en ce que** ladite phase d'analyse comprend une étape supplémentaire de détection si lesdits terminaux mobiles (551, 552) de ladite communication se situent en aval de la même terminaison de ladite liaison (401) radio à ressources partagées, selon une stratégie de détection incluant une étape d'analyse de tout ou partie desdits messages de signalisation,
et **en ce qu'**il comprend une troisième phase de déclenchement d'une opération de bouclage (57) local de tout ou partie des données échangées entre lesdits terminaux mobiles, sans réservation d'une voie de trafic au sein desdites ressources radio, dans le cas où ladite phase de détection confirme que lesdits terminaux mobiles (551, 552) de ladite communication se situent en aval de la même terminaison de ladite liaison radio à ressources partagées,
ladite troisième phase étant prioritaire par rapport à ladite seconde phase.

3. Procédé d'optimisation selon la revendication 2, **caractérisé en ce qu'**au moins certains des messages de signalisation continuent à être acheminés même en cas de bouclage local.

4. Procédé d'optimisation selon l'une quelconque des revendications 1 à 3, **caractérisé en ce que** ladite information indicative d'une activité de trafic est constituée par un message de signalisation indicatif des caractéristiques des besoins d'allocation de ressource dans la liaison entre ladite station de base et un terminal mobile appelant, ou ladite station de base et un terminal mobile appelé.

5. Procédé d'optimisation selon l'une quelconque des revendications 1 à 4, **caractérisé en ce que** ladite seconde phase comprend une étape supplémentaire de recherche et de détection, dans lesdits messages de signalisation, d'une information indicative d'une cessation d'un besoin de trafic,
et **en ce qu'**il comprend une quatrième phase de relâchement de ressources préalablement allouée au sein de ladite liaison radio à ressources partagées en fonction de ladite information indicative d'une cessation d'un besoin de trafic.

6. Procédé d'optimisation selon l'une quelconque des revendications 1 à 5, **caractérisé en ce que** ladite allocation de ressources au sein de ladite liaison radio à ressources partagées consiste à réserver une ressource de communication élémentaire à débit prédéterminé au sein desdites ressources radio partagées, parmi une pluralité de ressources élémentaires réservables individuellement.

7. Procédé d'optimisation selon l'une quelconque des revendications 1 à 6, **caractérisé en ce que** lesdits messages de signalisation sont conformes au standard GSM, et **en ce que** ladite information indicative d'un besoin de trafic est la réception du message « ACTIVATE ».

8. Procédé d'optimisation selon l'une quelconque des revendications 1 à 7, **caractérisé en ce que** lesdits messages de signalisation sont conformes au standard GSM, et **en ce que** ladite information indicative de la fin d'un besoin de trafic est la réception du message « RF CHANNEL RELEASE».

9. Procédé d'optimisation selon l'une quelconque des revendications 1 à 8, **caractérisé en ce que** ladite liaison radio à ressources partagées est de type liaison satellite, avec une gestion centralisée des ressources partagées de type DAMA (« Demand Assigned Multiple Access).

10. Procédé d'optimisation selon l'une quelconque des revendications 1 à 9, **caractérisé en ce qu'**il est mis en oeuvre pour optimiser l'allocation des canaux d'une liaison à ressources partagées situées cette fois entre le BSC et le MSC d'un réseau cellulaire de type GSM ou équivalent.

11. Procédé d'optimisation selon l'une quelconque des revendications 1 à 10, **caractérisé en ce que** ladite première phase inclut une étape supplémentaire d'analyse des informations « in band » de contrôle qui transitent dans la voie de trafic **en ce qu'**elle permet de tenir compte dans l'allocation des ressources radio d'autres informations concernant le type de codage utilisé, le taux d'activité de la parole, etc.

12. Réseau cellulaire de radiocommunications mobiles comprenant au moins une station de base, nommée BTS (421), contrôlée par un contrôleur de stations de base, nommé BSC (422), et un réseau de connexion connectant la ou lesdites BTS avec ledit BSC,
ledit réseau cellulaire étant configuré pour établir, maintenir et terminer des communications avec des terminaux mobiles dudit réseau cellulaire, l'établissement, le maintien et la terminaison desdites communications mettant en oeuvre des échanges de messages de signalisation,
ledit réseau de connexion incluant au moins une liaison (401) de type radio à ressources partagées entre la ou lesdites stations (421) de base et ledit contrôleur (422) de stations de base,
ledit réseau cellulaire comprenant des moyens pour mettre en oeuvre les phases suivantes :
- une première phase d'analyse du contenu de tout ou partie desdits messages de signalisation, ladite phase d'analyse incluant une étape de recherche et détection dans ledit contenu desdits messages de signalisation d'informations indicatives d'une activité de trafic ;
- une seconde phase d'allocation ou de non-allocation de ressources au sein de ladite liaison (401) radio à ressources partagées en fonction desdites informations indicatives d'une activité de trafic,
ledit réseau cellulaire étant **caractérisé en ce que** ladite liaison radio à ressources partagées est constituée d'une pluralité de canaux de transmission réservables de façon incrémentale, et **en ce que** ledit réseau cellulaire comprend des moyens pour mettre en oeuvre une prédiction de besoin de ressource radio qui tient compte des ressources radio déjà allouées dans ladite liaison radio à ressources partagées et une adaptation des ressources de ladite liaison radio selon la prédiction.

13. Réseau cellulaire selon la revendication 12 **caractérisé en ce que** les fonctions de mise en oeuvre desdites phases et desdites étapes sont localisées dans au plus trois dispositifs adaptateurs localisés dans le réseau,
et **en ce que** lesdits adaptateurs appartiennent au groupe comprenant :
- un premier adaptateur (431) situé au niveau de la ou desdites stations de base ;
- un second adaptateur (432) situé au niveau de l'équipement central de gestion des ressources radio partagées ;
- un troisième adaptateur (433) situé au niveau du contrôleur de la ou desdites stations de base.

14. Réseau cellulaire selon la revendication 13, **caractérisé en ce qu'**il comprend des moyens d'opération et de maintenance desdits adaptateurs, lesdits moyens communiquent avec chacun desdits adaptateurs de façon à configurer, et/ou superviser et/ou observer lesdits adaptateurs.

15. Réseau cellulaire selon l'une quelconque des revendications 12 et 14, **caractérisé en ce qu'**il comprend des premiers moyens d'adaptation A1 reliés d'un côté à la ou lesdites BTS par une interface de type El, et de l'autre côté à un équipement de terminaison de ladite liaison radio,
lesdits moyens d'adaptation A1 étant configurés pour remplir au moins une des fonctions appartenant au groupe de fonctions suivantes :
- analyse des messages de signalisation échangés avec la ou lesdites BTS et/ou des informations de contrôle in-band dans les voies de trafic ;
- analyse d'un besoin de bouclage local et/ou déclanchement d'une opération de bouclage local ;
- communication avec un équipement central d'opération de maintenance.

16. Réseau cellulaire selon l'une quelconque des revendications 12 à 15, du type dans lequel ledit réseau de connexion inclut au moins une seconde liaison de type Internet Protocol, IP, **caractérisé en ce qu'**il comprend :
- des seconds moyens d'adaptation A2 situés entre ladite liaison de type radio et ladite liaison de type IP ;
- des troisièmes moyens d'adaptation A3 situés entre ledit second canal de type IP et ledit contrôleur de stations de base ;
et **en ce que** les données de trafic et de signalisation sont transportées par paquets selon le protocole IP standard entre lesdits seconds et troisièmes moyens d'adaptation.

17. Réseau cellulaire selon la revendication 16, **caractérisé en ce que** l'information échangée entre lesdits premiers et seconds moyens d'adaptation A1 et A2, utilisant le réseau radio à ressources partagées, ne transporte pas les « overheads » nécessaires au protocole IP, lesquels n'étant introduits qu'entre A2 et A3.

18. Réseau cellulaire selon la revendication 16 **caractérisé en ce que**, ledit adaptateur A1 est configuré pour utiliser les *« overheads »* nécessaires au protocole IP et que en conséquence :
- A1 est apte à communiquer directement avec A3 selon le protocole IP ;
- A2 est apte à ne pas être introduit dans le réseau de connexion.

19. Réseau cellulaire selon l'une quelconque des revendications 12 à 18, **caractérisé en ce que** ladite liaison radio à ressources partagées met en oeuvre un satellite.

20. Réseau cellulaire selon l'une quelconques des revendications 16 à 18, **caractérisé en ce que** lesdits seconds moyens d'adaptation A2 sont configurés pour remplir au moins une des fonctions appartenant au groupe de fonctions suivantes :
- conversion des signaux transitant à l'interface radio/IP, dans un sens ou dans l'autre notamment :
∘ ajout/retrait aux signaux transmis de tous les éléments de protocole nécessaires au transport IP ;
∘ optimisation de la liaison radio en mode « paquet » le plus simple possible, sans les éléments liés au protocole IP ;
- mise en oeuvre des phases d'analyse de messages de signalisation et/ou d'allocation ou de non-allocation de ressources au sein de ladite liaison radio à ressources partagées ;
- analyse d'un besoin et/ou déclenchement d'une opération de bouclage local et/ou vérification permanente d'un besoin de « non bouclage »par message interne spécifique ;
- transfert de l'information de parole reçue de l'interface A1 BTS/radio vers l'interface A2 radio/IP pour reconstitution d'une information de parole cohérente au BSC afin de satisfaire aux exigences d'écoute légale.

21. Réseau cellulaire selon l'une des revendications 16 à 18, **caractérisé en ce que** lesdits troisièmes moyens d'adaptation A3 sont configurés pour remplir au moins une des fonctions appartenant au groupe de fonctions suivantes :
- conversion des signaux transitant à l'interface A3 IP/BSC, dans un sens ou dans l'autre, notamment :
∘ ajout/retrait aux signaux transmis de tous les éléments de protocole nécessaires au transport IP ;
∘ reconstitution d'une interface Abis standard avec ledit BSC ;
- génération d'un flux de parole virtuel, par exemple un flux aléatoire, pour alimenter le BSC en cas de bouclage local ;
- reconstitution d'une information de parole cohérente au BSC, sur la base d'une information de parole de l'interface A1 BTS/radio, afin de satisfaire aux exigences d'écoute légale ;
- reconstitution, le cas échéant, d'une information de parole cohérente.

22. Réseau cellulaire selon la revendication 20, **caractérisé en ce que** lesdits seconds moyens d'adaptation A2 sont intégrés à un dispositif de contrôle de ladite liaison à ressources partagées.

23. Réseau cellulaire selon l'une quelconque des revendications 20 à 22, **caractérisé en ce que** les fonctions des seconds et des troisième moyens d'adaptationA2 et A3 sont confondues dans un même équipement.

24. Réseau cellulaire selon la revendication 15, **caractérisé en ce que** lesdits premiers moyens d'adaptation A1 sont intégrés à ladite station de base.

25. Réseau cellulaire selon la revendication 21, **caractérisé en ce que** lesdits troisièmes moyens d'adaptation A3 sont intégrés audit contrôleur de stations de base.

## Patentansprüche

1. Verfahren zur Optimierung der Zuteilung von Ressourcen in einem zellularen Mobilfunkkommunikationsnetzwerk, wobei das zellulare Netzwerk mindestens eine Basisstation, BTS (421) genannt, die von einem Kontroller von Basisstationen BSC (422) kontrolliert wird, und ein Anschlussnetzwerk umfasst, das die BTS mit dem BSC verbindet, wobei das Verfahren darin besteht, Kommunikationen mit mobilen Endgeräten des zellularen Netzwerks herzustellen, aufrechtzuerhalten und zu beenden, wobei die Herstellung, die Aufrechterhaltung und die Beendigung der Kommunikationen Austausche von Signalisierungsnachrichten einsetzt, wobei das Anschlussnetzwerk mindestens eine Verbindung (401) vom Typ Bündelfunkverbindung zwischen der oder den Basisstationen (421) und dem Kontroller (422) einer Basisstation einschließt,
wobei das Verfahren die folgenden Phasen umfasst:
- eine erste Phase der Analyse des Inhalts der Gesamtheit oder eines Teils der Signalisierungsnachrichten, wobei die Analysephase einen Schritt der Suche und Erfassung in dem Inhalt der Signalisierungsnachrichten nach bzw. von Informationen einschließt, die auf eine Verkehrsaktivität hinweisen;
- eine zweite Phase der Zuteilung oder Nicht-Zuteilung von Ressourcen innerhalb der Bündelfunkverbindung (401) in Abhängigkeit von den Informationen, die auf eine Verkehrsaktivität hinweisen,
wobei das Verfahren **dadurch gekennzeichnet ist, dass** die Bündelfunkverbindung aus einer Vielzahl inkrementell reservierbarer Übertragungskanäle gebildet ist, und dass das Verfahren eine Vorhersage eines Bedarfs an Funkressourcen, die Funkressourcen berücksichtigt, die bereits in der Bündelfunkverbindung zugeteilt wurden, und eine Anpassung der Ressourcen der Funkverbindung gemäß der Vorhersage umfasst.

2. Optimierungsverfahren nach Anspruch 1, **dadurch gekennzeichnet, dass** die Analysephase einen zusätzlichen Schritt der Erfassung, ob sich die mobilen Endgeräte (551, 552) der Kommunikation stromabwärts zu derselben Beendigung der Bündelfunkverbindung (401) befinden, nach einer Erfassungsstrategie, die einen Schritt der Analyse der Gesamtheit oder eines Teils der Signalisierungsnachrichten einschließt, umfasst,
und dass es eine dritte Phase der Auslösung eines Vorgangs der lokalen Schleifung (57) der Gesamtheit oder eines Teils der zwischen den mobilen Endgeräten ausgetauschten Daten ohne Reservierung eines Verkehrswegs innerhalb der Funkressourcen umfasst, falls die Erfassungsphase bestätigt, dass sich die mobilen Endgeräte (551, 552) der Kommunikation stromabwärts zu derselben Beendigung der Bündelfunkverbindung befinden,
wobei die dritte Phase in Bezug zur zweiten Phase prioritär ist.

3. Optimierungsverfahren nach Anspruch 2, **dadurch gekennzeichnet, dass** mindestens gewisse Signalisierungsnachrichten auch im Falle einer lokalen Schleifung weiter befördert werden.

4. Optimierungsverfahren nach einem der Ansprüche 1 bis 3, **dadurch gekennzeichnet, dass** die Information, die auf eine Verkehrsaktivität hinweist, von einer Signalisierungsnachricht gebildet ist, die auf die Merkmale des Bedarfs an einer Ressourcenzuteilung in der Verbindung zwischen der Basisstation und einem anrufenden mobilen Endgerät oder der Basisstation und einem angerufenen mobilen Endgerät hinweist.

5. Optimierungsverfahren nach einem der Ansprüche 1 bis 4, **dadurch gekennzeichnet, dass** die zweite Phase einen zusätzlichen Schritt der Suche und Erfassung einer Information, die auf ein Aufhören eines Verkehrsbedarfs hinweist, in den Signalisierungsnachrichten umfasst, und dass es eine vierte Phase der Verringerung von Ressourcen, die vorher innerhalb der Bündelfunkverbindung zugeteilt wurden, in Abhängigkeit von der Information, die auf ein Aufhören des Verkehrsbedarfs hinweist, umfasst.

6. Optimierungsverfahren nach einem der Ansprüche 1 bis 5, **dadurch gekennzeichnet, dass** die Ressourcenzuteilung innerhalb der Bündelfunkverbindung darin besteht, eine elementare Kommunikationsressource mit vorbestimmter Durchgangsmenge der Bündelfunkressourcen unter einer Vielzahl von individuell reservierbaren elementaren Ressourcen zu reservieren.

7. Optimierungsverfahren nach einem der Ansprüche 1 bis 6, **dadurch gekennzeichnet, dass** die Signalisierungsnachrichten dem GSM-Standard entsprechen, und dass die Information, die auf einem Verkehrsbedarf hinweist, der Empfang der Nachricht "ACTIVATE" ist.

8. Optimierungsverfahren nach einem der Ansprüche 1 bis 7, **dadurch gekennzeichnet, dass** die Signalisierungsnachrichten dem GSM-Standard entsprechen, und dass die Information, die auf das Ende eines Verkehrsbedarfs hinweist, der Empfang der Nachricht "RF CHANNEL RELEASE" ist.

9. Optimierungsverfahren nach einem der Ansprüche 1 bis 8, **dadurch gekennzeichnet, dass** die Bündelfunkverbindung vom Typ Satellitenverbindung mit einer zentralisierten Verwaltung der Bündelressourcen vom Typ DAMA ("Demand Assigned Multiple Access) ist.

10. Optimierungsverfahren nach einem der Ansprüche 1 bis 9, **dadurch gekennzeichnet, dass** es eingesetzt wird, um die Zuteilung der Kanäle einer Verbindung mit Bündelressourcen zu optimieren, die sich dieses Mal zwischen der BSC und dem MSC eines zellularen Netzwerks vom Typ GSM oder dergleichen befindet.

11. Optimierungsverfahren nach einem der Ansprüche 1 bis 10, **dadurch gekennzeichnet, dass** die erste Phase einen zusätzlichen Schritt der Analyse der "In-Band"-Kontrollinformationen, die in dem Verkehrsweg durchlaufen, umfasst, und dass es ermöglicht, in der Zuteilung der Funkressourcen weitere Informationen betreffend die verwendete Codierung, die Aktivitätsrate der Sprache, usw. zu berücksichtigen.

12. Zellulares Mobilfunkkommunikationsnetzwerk, umfassend mindestens eine Basisstation, BTS (421) genannt, die von einem Kontroller von Basisstationen, BSC (422) genannt, kontrolliert wird, und ein Anschlussnetzwerk, das die BTS mit dem BSC verbindet, wobei das zellulare Netzwerk eingerichtet ist, um Kommunikationen mit mobilen Endgeräten des zellularen Netzwerks mit den mobilen Endgeräten des zellularen Netzwerks herzustellen, aufrechtzuerhalten und zu beenden,
wobei die Herstellung, die Aufrechterhaltung und die Beendigung der Kommunikationen Austausche von Signalisierungsnachrichten einsetzen,
wobei das Anschlussnetzwerk mindestens eine Verbindung (401) vom Typ Bündelfunkverbindung zwischen der oder den Basisstationen (421) und dem Kontroller (422) von Basisstationen einschließt,
wobei das zellulare Netzwerk Mittel umfasst, um die folgenden Phasen einzusetzen:
- eine erste Phase der Analyse des Inhalts der Gesamtheit oder eines Teils der Signalisierungsnachrichten, wobei die Analysephase einen Schritt der Suche und Erfassung in dem Inhalt der Signalisierungsnachrichten nach bzw. von Informationen, die auf eine Verkehrsaktivität hinweisen, einschließt;
- eine zweite Phase der Zuteilung oder Nicht-Zuteilung von Ressourcen innerhalb der Bündelfunkverbindung (401) in Abhängigkeit von den Informationen, die auf eine Verkehrsaktivität hinweisen,
wobei das zellulare Netzwerk **dadurch gekennzeichnet ist, dass** die Bündelfunkverbindung aus einer Vielzahl inkrementell reservierbarer Übertragungskanäle gebildet ist, und dass das zellulare Netzwerk Mittel für den Einsatz einer Vorhersage eines Bedarfs an Funkressourcen, die Funkressourcen berücksichtigt, die bereits in der Bündelfunkverbindung zugeteilt wurden, und eine Anpassung der Ressourcen der Funkverbindung gemäß der Vorhersage umfasst.

13. Zellulares Netzwerk nach Anspruch 12, **dadurch gekennzeichnet, dass** die Funktionen des Einsatzes der Phasen und der Schritte in höchstens drei in dem Netzwerk lokalisierten Adaptervorrichtungen lokalisiert sind,
und dass die Adapter der Gruppe angehören, umfassend:
- einen ersten Adapter (431), der sich im Bereich der Basisstation(en) befindet;
- einen zweiten Adapter (432), der sich im Bereich der zentralen Ausrüstung zur Verwaltung der Bündelfunkressourcen befindet;
- einen dritten Adapter (433), der sich im Bereich des Kontrollers der Basisstation(en) befindet.

14. Zellulares Netzwerk nach Anspruch 13, **dadurch gekennzeichnet, dass** es Mittel zum Betreiben und Warten der Adapter umfasst, wobei die Mittel mit jedem der Adapter kommunizieren, um die Adapter zu konfigurieren und/oder zu überwachen und/oder zu beobachten.

15. Zellulares Netzwerk nach einem der Ansprüche 12 und 14, **dadurch gekennzeichnet, dass** es erste Anpassungsmittel A1 umfasst, die einerseits mit der oder den BTS über eine Schnittstelle vom Typ E1 und andererseits mit einer Ausrüstung zur Beendigung der Funkverbindung verbunden sind,
wobei die Anpassungsmittel A1 eingerichtet sind, um mindestens eine der Funktionen zu erfüllen, die der folgenden Gruppe von Funktionen angehört:
- Analyse der Signalisierungsnachrichten, die mit der oder den BTS ausgetauscht werden, und/oder der In-Band-Kontrollinformationen in den Verkehrswegen;
- Analyse eines Bedarfs nach lokaler Schleifung und/oder Auslösung eines lokalen Schleifungsvorgangs;
- Kommunikation mit der zentralen Betriebs- und Wartungsausrüstung.

16. Zellulares Netzwerk nach einem der Ansprüche 12 bis 15, bei dem das Anschlussnetzwerk mindestens eine zweite Verbindung vom Typ Internet Protokoll, IP, einschließt, **dadurch gekennzeichnet, dass** es umfasst:
- zweite Anpassungsmittel A2, die sich zwischen der Funkverbindung und der IP-Verbindung befinden;
- dritte Anpassungsmittel A3, die sich zwischen dem zweiten IP-Kanal und dem Kontroller von Basisstationen befinden;
Und dass die Verkehrs- und Signalisierungsdaten in Paketen nach dem IP-Standard-Protokoll zwischen den zweiten und dritten Anpassungsmitteln transportiert werden.

17. Zellulares Netzwerk nach Anspruch 16, **dadurch gekennzeichnet, dass** die zwischen den ersten und zweiten Anpassungsmitteln A1 und A2 ausgetauschte Information, die das Bündelfunknetz verwendet, die für das IP-Protokoll notwendigen "Overheads" nicht transportiert, wobei diese nur zwischen A2 und A3 eingeführt werden.

18. Zellulares Netzwerk nach Anspruch 16, **dadurch gekennzeichnet, dass** der Adapter A1 eingerichtet ist, um die *"Overheads"* zu verwenden, die für das IP-Protokoll notwendig sind, und dass folglich:
- A1 geeignet ist, direkt mit A3 nach dem IP-Protokoll zu kommunizieren;
- A2 geeignet ist, nicht in das Anschlussnetzwerk eingeführt zu werden.

19. Zellulares Netzwerk nach einem der Ansprüche 12 bis 18, **dadurch gekennzeichnet, dass** die Bündelfunkverbindung einen Satelliten einsetzt.

20. Zellulares Netzwerk nach einem der Ansprüche 16 bis 18, **dadurch gekennzeichnet, dass** die zweiten Anpassungsmittel A2 eingerichtet sind, um mindestens eine der Funktionen zu erfüllen, die der folgenden Gruppe von Funktionen angehört:
- Umwandlung der Signale, die an der Funk-/IP-Schnittstelle in eine oder die andere Richtung durchlaufen, insbesondere:
∘ Hinzufügung/Entfernung aller für den IP-Transport notwendigen Protokollelemente zu/von den Signalen;
∘ Optimierung der Funkverbindung im "Paketmodus" möglichst einfach, ohne die mit dem IP-Protokoll verbundenen Elemente;
- Einsatz der Phasen der Analyse von Signalisierungsnachrichten und/oder der Zuteilung oder Nicht-Zuteilung von Ressourcen innerhalb der Bündelfunkverbindung;
- Analyse eines Bedarfs und/oder Auslösen eines lokalen Schleifungsvorgangs und/oder permanente Überprüfung eines Bedarfs an "Nicht-Schleifung" durch spezifische interne Benachrichtigung;
- Übertragung der von der Schnittstelle A1 BTS/Funk empfangenen Sprachinformation an die Schnittstelle A2 Funk/IP zur Wiederherstellung einer kohärenten Sprachinformation in der BSC, um den gesetzlichen Höranforderungen zu entsprechen.

21. Zellulares Netzwerk nach einem der Ansprüche 16 bis 18, **dadurch gekennzeichnet, dass** die dritten Anpassungsmittel A3 eingerichtet sind, um mindestens eine der Funktionen zu erfüllen, die der folgenden Gruppe von Funktionen angehört:
- Umwandlung der Signale, die an der Schnittstelle A3 IP/BSC in eine oder die andere Richtung durchlaufen, insbesondere:
∘ Hinzufügung/Entfernung aller für den IP-Transport notwendigen Protokollelemente zu/von den Signalen;
∘ Wiederherstellung einer Standard-Schnittstelle Abis mit dem BSC;
- Erzeugung eines virtuellen Sprachflusses, beispielsweise eines zufälligen Flusses, um den BSC im Falle einer lokalen Schleifung zu versorgen;
- Wiederherstellung einer kohärenten Sprachinformation am BSC auf Basis einer Sprachinformation von der Schnittstelle A1 BTS/Funk, um den gesetzlichen Höranforderungen zu entsprechen;
- gegebenenfalls Wiederherstellung einer kohärenten Sprachinformation.

22. Zellulares Netzwerk nach Anspruch 20, **dadurch gekennzeichnet, dass** die zweiten Anpassungsmittel A2 in eine Kontrollvorrichtung der Bündelfunkverbindung integriert sind.

23. Zellulares Netzwerk nach einem der Ansprüche 20 bis 22, **dadurch gekennzeichnet, dass** die Funktionen der zweiten und dritten Anpassungsmittel A2 und A3 in einer selben Ausrüstung zusammenkommen.

24. Zellulares Netzwerk nach Anspruch 15, **dadurch gekennzeichnet, dass** die ersten Anpassungsmittel A1 in die Basisstation integriert sind.

25. Zellulares Netzwerk nach Anspruch 21, **dadurch gekennzeichnet, dass** die dritten Anpassungsmittel A3 in den Kontroller von Basisstationen integriert sind.

## Claims

1. Method for optimising the allocation of resources in a mobile radio communication cellular network, said cellular network comprising at least one base station, called BTS (421), controlled by a base station controller, called BSC (422), and a connecting network connecting said BTS(s) with said BSC,
The method being of the type consisting of setting up, maintaining and termination of communications with mobile station of said cellular network,
the setting up, the maintaining and the terminating of said communications implementing exchanges of signalling messages,
said connecting network including at least one link (401) of the radio type with shared resources between said base station(s) (421) and said base station controller (422),
the method comprising the following phases:
- a first analysing phase of the content of all or a portion of said signalling messages, said analysing phase including a step of searching for and detecting in said content of said signalling messages data indicating a traffic activity;
- a second phase of allocating or not allocating of resources within said radio link (401) with shared resources according to said data indicating a traffic activity,
Said method being **characterized in that** said radio link with shared resources is constituted of a plurality of transmission channels that can be reserved incrementally, and **in that** the method comprises a prediction of radio resource needs which takes into account the radio resources that have already been allocated in said radio link with shared resources, and an adaptation of the resources of said radio link according to the predication.

2. Method for optimising as set forth in claim 1, **characterised in that** said analysing phase comprises an additional step of detecting if said mobile station (551, 552) of said communication are located downstream of the same termination of said radio link (401) radio with shared resources, according to a detection strategy including a step of analysing all or a portion of said signalling messages,
and **in that** it comprises a third phase of triggering a local loopback operation (57) of all or a portion of the data exchanged between said mobile station, without reservation of a traffic channel within said radio resources, in the case where said detecting phase confirms that said mobile station (551, 552) of said communication are located downstream of the same termination of said radio link with shared resources,
said third phase having priority in relation to said second phase.

3. Method for optimising as set forth in claim 2, **characterised in that** at least some of the signalling messages continue to be carried even in the case of a local loopback.

4. Method for optimising as set forth in any of claims 1 to 3, **characterised in that** said information indicating a traffic activity is constituted by a signalling message indicating characteristics of needs to allocate resources in the link between said base station and a caller terminal mobile, or said base station and a called party terminal mobile.

5. Method for optimising as set forth in any of claims 1 to 4, **characterised in that** said second phase comprises an additional step of searching for and detecting, in the signalling messages, data indicating a termination of a need of traffic,
and **in that** it comprises a fourth phase of releasing resources that were previously allocated within the radio link with shared resources according to said data indicating a termination of a need of traffic.

6. Method for optimising as set forth in any of claims 1 to 5, **characterised in that** said allocation of resources within said radio link with shared resources consists in reserving an elementary communication resource at a predetermined rate within said shared radio resources, from among a plurality of elementary resources that can be reserved individually.

7. Method for optimising as set forth in any of claims 1 to 6, **characterised in that** said signalling messages are compliant with the GSM standard, and **in that** said data indicating a need for traffic is the reception of the "ACTIVATE" message.

8. Method for optimising as set forth in any of claims 1 to 7, **characterised in that** said signalling messages are compliant with the GSM standard, and **in that** said data indicating the end of a need of traffic is the reception of the "RF CHANNEL RELEASE" message.

9. Method for optimising as set forth in any of claims 1 to 8, **characterised in that** said radio link with shared resources is of the satellite link type, with centralised management of the shared resources of the DAMA ("Demand Assigned Multiple Access") type.

10. Method for optimising as set forth in any of claims 1 to 9, **characterised in that** it is implemented in order to optimise the allocation of the channels of a link with shared resources located this time between the BSC and the MSC of a cellular network of the GSM or equivalent type.

11. Method for optimising as set forth in any of claims 1 to 10, **characterised in that** said first phase includes an additional step of analysing the "in band" control data that transits in the traffic channel and **in that** it makes it possible to take into account in the allocation of the radio resources of other data concerning the type of codings used, the speech activity rate, etc.

12. Radio communication cellular network comprising at least one base station, called BTS (421), controlled by a base station controller, called BSC (422), and a connecting network connecting said BTS(s) with said BSC,
The cellular network being configured for setting up, maintaining and termination of communications with mobile station of said cellular network,
the setting up, the maintaining and the terminating of said communications implementing exchanges of signalling messages,
said connecting network including at least one link (401) of the radio type with shared resources between said base station(s) (421) and said base station controller (422),
Said cellular network comprising means for implementing the following phases:
- a first analysing phase of the content of all or a portion of said signalling messages, said analysing phase including a step of searching for and detecting in said content of said signalling messages data indicating a traffic activity;
- a second phase of allocating or not allocating of resources within said radio link (401) with shared resources according to said data indicating a traffic activity,
Said cellular network being **characterized in that** said radio link with shared resources is constituted of a plurality of transmission channels that can be reserved incrementally, and **in that** the method comprises a prediction of radio resource needs which takes into account the radio resources that have already been allocated in said radio link with shared resources, and an adaptation of the resources of said radio link according to the predication.

13. Cellular network as set forth in claim 12 **characterised in that** the functions of implementing of said phases and of said steps are located in at most three adapter devices located in the network,
and **in that** said adapters belong to the group comprising:
- a first adapter (431) located on the said base station(s);
- a second adapter (432) located on the central management equipment of shared radio resources;
- a third adapter (433) located on the controller of the said base station(s).

14. Cellular Network as set forth in claim 13, **characterised in that** it comprises means of operation and maintenance of said adapters, said means communicate with each of the said adapters in such a way as to configure, and/or supervise and/or observe said adapters.

15. Cellular network as set forth in any of claims 12 and 14,
**characterised in that** it comprises first means of adaptation A1 connected on one side to said BTS(s) by an interface of the E1 type, and on the other side to a termination equipment of said radio link,
said means of adaptation A1 being configured for fulfilling at least one of the functions belonging to the following group of functions:
- analyse signalling messages exchanged with said BTS(s) and/or in-band control data in the traffic channels;
- analyse the need for local loopback and/or triggering of a local loopback operation;
- communication with a central equipment for maintenance operation.

16. Cellular network as set forth in any of claims 12 to 15, of the type wherein said connecting network includes at least one second link of the Internet Protocol IP type, **characterised in that** it comprises
- a second means of adaptation A2 located between said link of the radio type and said link of the IP type;
- a third means of adaptation A3 located between said second channel of the IP type and said base station controller;
and **in that** the traffic data and signalling data are transported by packets according to the standard IP protocol between said second and third means of adaptation.

17. Cellular network as set forth in claim 16, **characterised in that** data exchanged between said first and second means of adaptation A1 and A2, using the shared resource radio network, does not carry the "overheads" needed for the IP protocol, which are introduced only between A2 and A3.

18. Cellular network as set forth in claim 16 **characterised in that**, said adapter A1 is configured for using the "overheads" necessary for the IP protocol and that consequently:
- A1 is able to communicate directly with A3 according to the IP protocol;
- A2 in able not to be introduced in the connecting network.

19. Cellular network as set forth in any of claims 12 to 18, **characterised in that** said radio link with shared resources implements a satellite.

20. Cellular Network according to any of claims 16 to 18, **characterised in that** said second adaption means A2 are configured for fulfilling at least one of the functions belonging to the following group of functions:
- conversion of signals transiting through the radio/IP interface, in one direction or the other in particular:
-- adding/removing from the transmitted signals all of the protocol elements needed for IP transport;
-- optimisation of the radio link in "packet" mode as simply as possible, without the elements linked to the IP protocol;
- implementation of the phases of analysing signalling messages and/or allocating or not allocating resources within the radio link with shared resources;
- analysing a need and/or triggering of a local loopback operation and/or permanent verification of a need for "non loopback" via a specific internal message;
- transfer of the speech data received from the BTS/radio interface A1 to the radio/IP interface A2 in order to reconstitute coherent speech data at the BSC in order to satisfy legal tapping requirements.

21. Cellular network according to one of claims 16 to 18, **characterised in that** said third adaptation means A3, are configured for fulfilling at least one of the functions belonging to the following group of functions:
- conversion of the signals transiting through the IP/BSC interface A3, in one direction or the other in particular:
-- adding/removing from the transmitted signals all of the protocol elements needed for IP transport;
-- reconstitution of a standard interface Abis with the BSC;
- generation of a virtual speech flow, for example a random flow, to supply the BSC in case of local loopback;
- reconstitution of coherent speech data at the BSC, based on speech data of the BTS/radio interface A1, in order to satisfy legal tapping requirements;
- reconstitution, where applicable, of coherent speech data.

22. Cellular network as set forth in claim 20, **characterised in that** said second adaptation means A2 are incorporated into a control device for said shared resource link.

23. Cellular network set forth in any of claims 20 to 22, **characterised in that** second and third adaptation means A2 and A3 are confounded in the same piece of equipment.

24. Cellular network as set forth in claim 15, **characterised in that** said first means of adaptation A1 are incorporated into said base station.

25. Cellular network as set forth in claim 21, **characterised in that** said third means of adaptation A3 are incorporated into said base station controller.
